# EUROPEAN PATENT APPLICATION

(11) **EP 3 905 387 A1**
(43) Date of publication of application: **03.11.2021**
(21) Application number: 19905985.8
(22) Date of filing: 25.12.2019
(51) Int. Cl.: H01M 4/13, H01M 4/139, H01M 4/62, H01M 10/0562, H01M 10/0565, H01M 10/0585

(54) **ELECTRODE FOR ALL-SOLID-STATE SECONDARY BATTERIES, ALL-SOLID-STATE SECONDARY BATTERY AND METHOD FOR PRODUCING ALL-SOLID-STATE SECONDARY BATTERY**

(30) Priority: 26.12.2018 JP 2018242235
(71) Applicant: Ube Industries, Ltd., Yamaguchi 755-8633 (JP)
(72) Inventor: NAKAYAMA Takeshige, Ube-shi, Yamaguchi 755-8633 (JP); MORISHITA Masanori, Yonezawa-shi, Yamagata 992-8510 (JP); SAKAI Tetsuo, Yonezawa-shi, Yamagata 992-8510 (JP)
(74) Representative: Plasseraud IP
(86) International application number: PCT/JP2019/050866
(87) International publication number: WO 2020/138187

(57) **Abstract**

The present inventions relate to an electrode for an all-solid secondary battery, comprising an electrode active material layer comprising an electrode active material and a binder resin on a current collector, wherein the binder resin comprises a polyimide resin, and the electrode active material layer does not contain an electrolyte; and an all-solid secondary battery, comprising the electrode as a positive electrode or a negative electrode.

## Description

### TECHNICAL FIELD

The present inventions relate to an electrode for an all-solid secondary battery, and an all-solid secondary battery.

### BACKGROUND ART

A lithium-ion secondary battery has high energy density and high capacity, and is therefore widely used as a driving power source for a mobile information terminal, etc. In recent years, its use in industrial applications such as equipping in a hybrid electric vehicle requiring large capacity is becoming widespread, and studies for further higher capacity and higher performance are being made.

While high energy density of a lithium-ion secondary battery is required, an all-solid secondary battery has been studied which uses a non-inflammable inorganic solid electrolyte instead of a non-aqueous electrolyte solution in which an electrolyte salt such as lithium salt is dissolved in an organic solvent, in order to secure and improve battery safety. An all-solid secondary battery comprises a positive electrode, a negative electrode, and a solid electrolyte layer disposed between them, and generally, the solid electrolyte is also added to each electrode (specifically, a positive electrode active material layer and a negative electrode active material layer) in terms of performance.

For example, Patent Literature 1 discloses an all-solid secondary battery comprising a positive electrode active material layer, an inorganic solid electrolyte layer and a negative electrode active material layer in this order, wherein the positive electrode active material layer, the inorganic solid electrolyte layer and the negative electrode active material contain a specific polymer and inorganic solid electrolyte. Patent Literature 2 discloses an electrode for a solid electrolyte battery in which a mixture of a powdery active material, a solid electrolyte and a conductive auxiliary agent is bound by a specific binder to form an active material layer in a membranous state on a current collector; and a solid electrolyte battery in which the electrode for a solid electrolyte battery is used for at least one of a positive electrode and a negative electrode. Further, Patent Literature 3 discloses an all-solid secondary battery comprising a positive electrode active material layer, a solid electrolyte layer and a negative electrode active material layer in this order, wherein the positive electrode active material layer, the negative electrode active material layer and the solid electrolyte layer are layers containing an inorganic solid electrolyte having conductivity of an ion of a metal element belonging to Group 1 or 2 in the periodic table and binder particles containing an ionic conductive material, specifically, an inorganic solid electrolyte or a liquid electrolyte.

Further, Patent Literature 4 discloses a solid battery comprising a positive electrode, a negative electrode and a solid electrolyte layer made of a solid electrolyte provided between the positive electrode and the negative electrode, wherein the negative electrode comprises a negative electrode active material, a first binder which is bound to the solid electrolyte and is inactive to the solid electrolyte, and a second binder which has a better binding property to the negative electrode current collector than the first binder; and the second binder contains a highly elastic resin. Patent Literature 4 describes that the negative electrode does not contain a solid electrolyte, but in the examples, an electrolyte layer coating liquid was applied onto the negative electrode structure and then dried to form an electrolyte layer on the negative electrode structure. According to this method, the formed negative electrode layer contains a solid electrolyte, because the solid electrolyte swells (penetrates) from the electrolyte layer to the negative electrode layer, when the solid battery is prepared, that is, when the electrolyte layer coating liquid is applied on the negative electrode.

Patent Literature 5 discloses an all-solid secondary battery comprising a positive electrode active material layer, a solid electrolyte layer and a negative electrode active material layer in this order, wherein a content of an inorganic solid electrolyte in at least one of the positive electrode active material layer and the negative electrode active material layer is 0 to 10 mass% with respect to the total solid content constituting each layer; the solid electrolyte layer contains a sulfide-based solid electrolyte; at least one of the positive electrode active material layer and the negative electrode active material layer contains a binder; and the negative electrode active material layer contains a specific negative electrode active material. However, in the example of Patent Literature 5, a solid electrolyte composition was applied on the positive electrode active material layer of the positive electrode sheet for a secondary battery and heated to form the solid electrolyte layer, and then a composition for a secondary battery negative electrode was applied onto the dried solid electrolyte layer and heated to form the negative electrode active material layer. According to this method, the formed positive electrode active material layer and the negative electrode active material layer contain a solid electrolyte, because the solid electrolyte swells (penetrates) to the positive electrode active material layer and the negative electrode active material layer, as in the method described in Patent Literature 4.

Further, an all-solid secondary battery using an organic solid electrolyte, that is, a polymer solid electrolyte, instead of an inorganic solid electrolyte, has also been studied. However, even in that case, a solid electrolyte is generally added to each electrode (specifically, a positive electrode active material layer and a negative electrode active material layer) from the viewpoint of performance. For example, Patent Literature 6 discloses a polymer solid electrolyte lithium battery comprising a positive electrode using a compound mainly containing a transition metal oxide as a positive electrode active material, a negative electrode using a material capable of occluding and releasing lithium metal, a lithium alloy or a lithium ion as a negative electrode active material, and an electrolyte, wherein a specific polymer solid electrolyte is used for the electrolyte. However, in the examples, a precursor of the polymer solid electrolyte is impregnated on the formed positive electrode active material layer, and cured by electron beam irradiation to form a composite positive electrode containing the electrolyte.

### CITATION LIST

### PATENT LITERATURE

Patent Literature 1: WO 2016/125716
Patent Literature 2: JP 2013-45683
Patent Literature 3: WO 2017/099248
Patent Literature 4: JP 2014-116154
Patent Literature 5: JP 2016-212990
Patent Literature 6: JP 2003-92138

### SUMMARY OF THE INVENTION

### TECHNICAL PROBLEM

An object of the present invention is to provide an electrode for an all-solid secondary battery whereby an all-solid secondary battery can be obtained, even if the electrode active material layer does not contain an electrolyte which was an essential component in a conventional electrode for an all-solid secondary battery. An object is to provide a practical all-solid secondary battery using an electrode wherein an electrode active material layer does not contain an electrolyte.

### SOLUTION TO THE PROBLEM

The present inventions relate to the following items.
[1] An electrode for an all-solid secondary battery, comprising an electrode active material layer comprising an electrode active material and a binder resin on a current collector,
   wherein the binder resin comprises a polyimide resin, and
   the electrode active material layer does not contain an electrolyte.
[2] The electrode according to [1], wherein the electrode active material layer further comprises a conductive auxiliary agent.
[3] An all-solid secondary battery, comprising a positive electrode, a solid electrolyte layer and a negative electrode,
   wherein the positive electrode and/or the negative electrode is the electrode according to [1] or [2].
[4] A method of producing an electrode for an all-solid secondary battery, comprising
   a step of applying onto a current collector an electrode mixture paste which comprises an electrode active material, a polyimide resin as a binder resin or a precursor thereof, and a solvent, but does not contain an electrolyte, and
   a step of drying or heat-treating the applied electrode mixture paste to form an electrode active material layer.
[5] A method of producing an all-solid secondary battery, comprising
   a step of preparing an electrode sheet comprising on a current collector an electrode active material layer which comprises an electrode active material and a polyimide resin as a binder resin, but does not contain an electrolyte, and
   a step of laminating and integrating the electrode sheet, a solid electrolyte containing sheet comprising a solid electrolyte, and a counter electrode sheet.
[6] The method of producing an all-solid secondary battery according to [5],
   wherein the step of preparing an electrode sheet comprises
   a step of applying onto a current collector an electrode mixture paste which comprises the electrode active material, the polyimide resin as a binder resin or a precursor thereof, and a solvent, but does not contain an electrolyte, and
   a step of drying or heat-treating the applied electrode mixture paste to form an electrode active material layer.
[7] The method of producing an all-solid secondary battery according to [5] or [6],
   wherein the counter electrode sheet comprises on a current collector an electrode active material layer which comprises an electrode active material and a polyimide resin as a binder resin, but does not contain an electrolyte.
[8] The method of producing an all-solid secondary battery according to any one of [5] to [7],
   wherein the electrode sheet, the solid electrolyte containing sheet and the counter electrode sheet are laminated by a dry method.

### ADVANTAGEOUS EFFECTS OF THE INVENTION

According to the present inventions, an electrode for an all-solid secondary battery can be provided, whereby an all-solid secondary battery can be obtained, even if the electrode active material layer does not contain an electrolyte which was an essential component in a conventional electrode for an all-solid secondary battery. A practical all-solid secondary battery using an electrode wherein an electrode active material layer does not contain an electrolyte, can be provided.

### DESCRIPTION OF THE INVENTION

The electrode for an all-solid secondary battery of the present invention comprises on a current collector an electrode active material layer which comprises an electrode active material and a binder resin, but does not contain an electrolyte (a liquid electrolyte and a solid electrolyte), wherein the binder resin contained in the electrode active material layer comprises a polyimide resin. The all-solid secondary battery of the present invention comprises a positive electrode, a solid electrolyte layer and a negative electrode, wherein the positive electrode and/or the negative electrode is the electrode for an all-solid secondary battery of the present invention. That is, the all-solid secondary battery of the present invention comprises a positive electrode, a solid electrolyte layer and a negative electrode, wherein the positive electrode comprises a positive electrode active material and a polyimide resin as a positive electrode binder resin, and has a positive electrode active material layer containing no electrolyte on a positive electrode current collector; or wherein the negative electrode comprises a negative electrode active material and a polyimide resin as a negative electrode binder resin, and has a negative electrode active material layer containing no electrolyte on a negative electrode current collector.

When the electrode is a positive electrode, the contained electrode active material and the binder resin are referred to as the positive electrode active material and the positive electrode binder resin, respectively, and the electrode active material layer and the current collector are referred to as the positive electrode active material layer and the positive electrode current collector, respectively. When the electrode is a negative electrode, the contained electrode active material and the binder resin are referred to as the negative electrode active material and the negative electrode binder resin, respectively, and the electrode active material layer and the current collector are referred to as the negative electrode active material layer and the negative electrode current collector, respectively. Further, one of the positive electrode and the negative electrode may be referred to as an electrode, and the other may be referred to as a counter electrode. For example, when the positive electrode is the electrode for an all-solid secondary battery of the present invention, the positive electrode may be referred to as an electrode, and a negative electrode may be referred to as a counter electrode. When the negative electrode is the electrode for an all-solid secondary battery of the present invention, the negative electrode may be referred to as an electrode, and a positive electrode may be referred to as a counter electrode. However, in any case, the counter electrode may be the electrode for an all-solid secondary battery of the present invention.

Hereinafter, the electrode for an all-solid secondary battery and the all-solid secondary battery of the present invention are explained for each component.

### 1. Electrode

The electrode for an all-solid secondary battery of the present invention comprises an electrode active material (a positive electrode active material or a negative electrode active material) and a polyimide resin as a binder resin, and has an electrode active material layer containing no electrolyte (a positive electrode active material layer or a negative electrode active material layer) on a current collector (a positive electrode current collector or a negative electrode current collector). The electrode active material layer may further contain a conductive auxiliary agent or other additives.

It is known that polyimide resins generally have almost no ionic conductivity. However, despite having almost no ionic conductivity, by using a polyimide resin as a binder resin, it becomes possible to obtain a practical all-solid secondary battery, even if to an electrode active material layer, an electrolyte is not added, which was an essential component in a conventional electrode for an all-solid secondary battery. In the present invention, the "electrolyte" not contained in the electrode active material layer means a material serving as a supply source of ions that release cations (Li ions); a commonly known and used inorganic solid electrolyte and polymeric solid electrolyte which do not release cations (Li ions) by themselves, and exhibit an ion transport function and function as an electrolyte.; and a liquid electrolyte. The electrode active material layer of the electrode for an all-solid secondary battery of the present invention may contain an electrode active material containing lithium.

### <Binder resin>

In the present invention, a polyimide resin is used as a binder resin. Here, the polyimide resin means a polymer or oligomer comprising at least one kind of a repeating unit having an imide structure derived from a tetracarboxylic acid component (the tetracarboxylic acid component includes a tetracarboxylic acid as well as a tetracarboxylic acid derivative such as a tetracarboxylic dianhydride, a tetracarboxylic acid ester, and is preferably a tetracarboxylic dianhydride) and a diamine component (the diamine component includes a diamine as well as a diisocyanate and the like, and is preferably a diamine). Examples of the polyimide resin include polyamideimide, polyetherimide, polyesterimide and the like. The polyimide resin used in the present invention may be a partially imidized polyamic acid having an imidization ratio of less than 100%.

The polyimide resin used as a binder resin in the present invention is preferably, for example, a polyimide resin composed of a repeating unit represented by the following chemical formula (1): 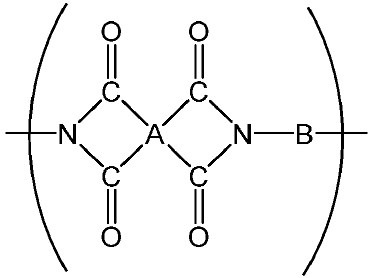 In the chemical formula (1),
A is at least one kind of tetravalent groups obtained by removing carboxyl groups from tetracarboxylic acids, and is preferably at least one kind of tetravalent groups represented by any one of the following chemical formulas (A-1) to (A-7). Particularly preferably, 10 to 100 mol%, preferably 15 to 70 mol%, more preferably 20 to 60 mol%, and particularly preferably 20 to 50 mol% of A is a tetravalent group represented by the following chemical formula (A-1), and 90 to 0 mol%, preferably 85 to 30 mol%, more preferably 80 to 40 mol%, and particularly preferably 80 to 50 mol% of A is a tetravalent group represented by the following chemical formula (A-2) and/or the following chemical formula (A-3); and
B is at least one kind of divalent groups obtained by removing amino groups from diamines, and is preferably at least one kind of divalent groups having 1 to 4 aromatic rings, and is more preferably at least one kind of divalent groups represented by any one of the following chemical formulas (B-1) to (B-5), and is particularly preferably at least one kind of divalent groups represented by any one of the following chemical formulas (B-1) to (B-3).

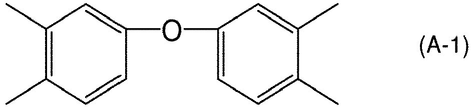

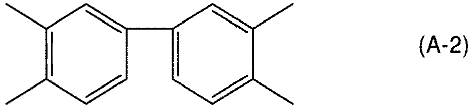

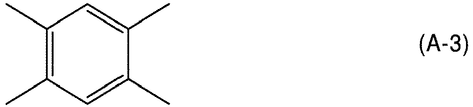

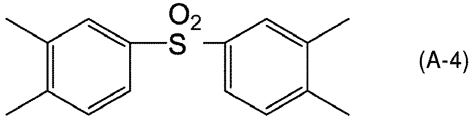

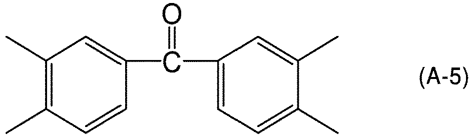

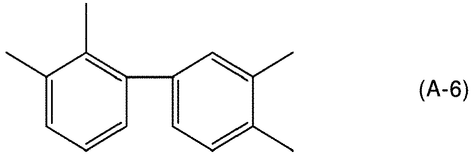

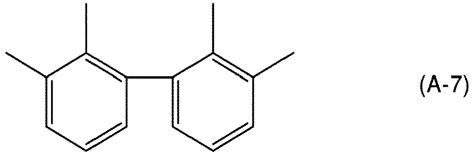

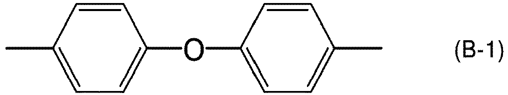

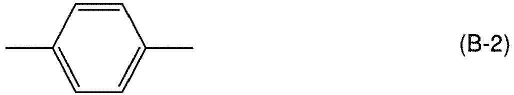

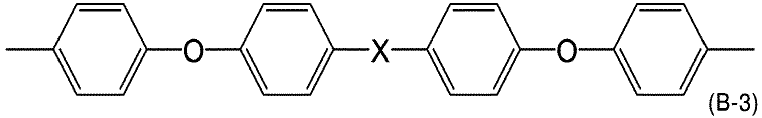

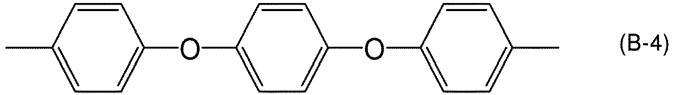

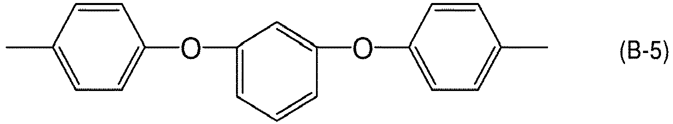

In the chemical formula (B-3), X is a direct bond, an oxygen atom, a sulfur atom, methylene, carbonyl, sulfoxyl, sulfonyl, 1,1'-ethylidene, 1,2-ethylidene, 2,2'-isopropylidene, 2,2'-hexafluoroisopropylidene, cyclohexylidene, phenylene, 1,3-phenylenedimethylene, 1,4-phenylenedimethylene, 1,3-phenylenediethylidene, 1,4-phenylenediethylidene, 1,3-phenylenedipropylidene, 1,4-phenylenedipropylidene, 1,3-phenylenedioxy, 1,4-phenylenedioxy, biphenylenedioxy, methylene diphenoxy, ethylidene diphenoxy, propylidene diphenoxy, hexafluoropropylidene diphenoxy, oxydiphenoxy, thiodiphenoxy, or sulfone diphenoxy.

The tetracarboxylic acid component that can be preferably used to obtain the polyimide resin composed of the repeating unit represented by the chemical formula (1), includes, for example, 4,4'-oxydiphthalic acid components (tetracarboxylic acid components to provide a tetravalent group represented by the chemical formula (A-1)), 3,3',4,4'-biphenyltetracarboxylic acid components (tetracarboxylic acid components to provide a tetravalent group represented by the chemical formula (A-2)), pyromellitic acid components (tetracarboxylic acid components to provide a tetravalent group represented by the chemical formula (A-3)), 3,3',4,4'-diphenylsulfone tetracarboxylic acid components (tetracarboxylic acid components to provide a tetravalent group represented by the chemical formula (A-4)), 3,3',4,4'-benzophenone tetracarboxylic acid components (tetracarboxylic acid components to provide a tetravalent group represented by the chemical formula (A-5)), 2,3,3',4'-biphenyltetracarboxylic acid components (tetracarboxylic acid components to provide a tetravalent group represented by the chemical formula (A-6)), 2,2',3,3'-biphenyltetracarboxylic acid components (tetracarboxylic acid components to provide a tetravalent group represented by the chemical formula (A-7)), p-terphenyltetracarboxylic acid components, m-terphenyltetracarboxylic acid components, and the like.

The diamine component that can be preferably used to obtain the polyimide resin composed of the repeating unit represented by the chemical formula (1), includes, for example, an aromatic diamine having one aromatic ring such as p-phenylenediamine (a diamine component to provide a divalent group represented by the chemical formula (B-2)), m-phenylenediamine, 2,4-diaminotoluene, 2,4-bis(β-amino-tert-butyl)toluene, bis-p-(1,1-dimethyl-5-amino-pentyl)benzene, 1-isopropyl-2,4-m-phenylenediamine, m-xylylenediamine, and p-xylylenediamine; an aromatic diamine having two aromatic rings such as 4,4'-diaminodiphenyl ether (a diamine component to provide a divalent group represented by the chemical formula (B-1)), 3,4'-diaminodiphenyl ether, 4,4'-diaminodiphenylmethane, 3,3'-diaminodiphenylmethane, 3,3'-dichlorobenzidine, 4,4'-diaminodiphenyl sulfide, 3,3'-diaminodiphenyl sulfone, 1,5-diaminonaphthalene, 3,3'-dimethyl-4,4'-biphenyldiamine, benzidine, 3,3'-dimethylbenzidine, 3,3'-dimethoxybenzidine, 4,4'-diaminodiphenylsulfone, 4,4'-diaminodiphenylpropane, bis(4-amino-3-carboxyphenyl)methane, and bis(p-β-amino-tert-butylphenyl) ether; an aromatic diamine having three aromatic rings such as 1,3-bis(4-aminophenoxy)benzene (a diamine component to provide a divalent group represented by the chemical formula (B-5)), 1,4-bis(4-aminophenoxy)benzene (a diamine component to provide a divalent group represented by the chemical formula (B-4)), and bis(p-β-methyl-6-aminophenyl)benzene; an aromatic diamine having four aromatic rings such as 2,2-bis[4-(4-aminophenoxy)phenyl]propane (a diamine component to provide a divalent group represented by the chemical formula (B-3) wherein X is 2,2'-isopropylidene), bis[4-(4-aminophenoxy)phenyl]sulfone (a diamine component to provide a divalent group represented by the chemical formula (B-3) wherein X is sulfonyl), 4,4'-bis(4-aminophenoxy)biphenyl (a diamine component to provide a divalent group represented by the chemical formula (B-3) wherein X is a direct bond), and the like.

The polyimide resin used as a binder resin in the present invention, is preferably, for example, a polyimide resin wherein at least one of the tetracarboxylic acid component and the diamine component, preferably either one of the tetracarboxylic acid component and the diamine component, includes 50 mol% or more, preferably 80 mol% or more of an aliphatic compound. The polyimide resin is particularly preferably, for example, a polyimide resin composed of the repeating units represented by the chemical formula (1), wherein A is one or more tetravalent groups having 1 or 2 aromatic rings, and B is one or more divalent alkylenes having 1 to 20 carbon atoms. In this polyimide resin, A is preferably one or more tetravalent groups represented by any one of the chemical formulas (A-1) to (A-3) and (A-6). In this polyimide resin, B is preferably one or more alkylenes having 3 to 16 carbon atoms, more preferably alkylenes having 3 to 14 carbon atoms. B may be a linear alkylene or a branched alkylene.

The tetracarboxylic acid component that can be preferably used to obtain this polyimide resin includes, for example, an aromatic tetracarboxylic acid component such as 3,3',4,4'-biphenyltetracarboxylic acid components, 2,3,3',4'-biphenyltetracarboxylic acid components, 2,2',3,3'-biphenyltetracarboxylic acid components, pyromellitic acid components, benzophenonetetracarboxylic acid components, 4,4'-oxydiphthalic acid components, diphenylsulfonetetracarboxylic acid components, p-terphenyltetracarboxylic acid components, m-terphenyltetracarboxylic acid components. The tetracarboxylic acid component includes, for example, an aliphatic tetracarboxylic acid component such as butane-1,2,3,4-tetracarboxylie acid components.

The diamine component that can be preferably used to obtain this polyimide resin includes, for example, an aliphatic diamine such as 1,2-propanediamine, 1,3-diaminopropane, 2-methyl-1,3-propanediamine, 1,4-diaminobutane. 1,3-diaminopentane, 1,5-diaminopentane, 2-methyl-1,5-diaminopentane, 1,6-diaminohexane (hexamethylenediamine), 1,7-diaminoheptane, 1,8-diaminooctane, 1,9-diaminononane, 1,10-diaminodecane, 1,11-diaminoundecane, and 1,12-diaminododecane. The diamine component includes, for example, an aromatic diamine such as p-phenylenediamine, m-phenylenediamine, 2,4-diaminotoluene, m-xylylenediamine, p-xylylenediamine, 4,4'-diaminodiphenyl ether, 3,4'-diaminodiphenyl ether, 4,4'-diaminodiphenylmethane, 3,3'-diaminodiphenylmethane, 3,4'-diaminodiphenylmethane, 4,4'-diaminodiphenyl sulfide, 4,4'-diaminodiphenyl sulfone, 3,3'-diaminodiphenyl sulfone, 1,5-diaminonaphthalene, bis(4-amino-3-carboxyphenyl)methane, 1,3-bis(4-aminophenoxy)benzene, 1,4-bis(4-aminophenoxy)benzene, 2,2-bis[4-(4-aminophenoxy)phenyl]propane, bis[4-(4-aminophenoxy)phenyl]sulfone, and 4,4'-bis(4-aminophenoxy)biphenyl.

A commercially available product may be used as the polyimide resin used as a binder resin. For example, UPIA-LB-1001, UPIA-LB-2001, UPIA-AT (U-Varnish-A), UPIA-ST (U-Varnish-S), etc. manufactured by Ube Industries Ltd. may be preferably used.

The polyimide resin as a binder resin may be used alone or in combination of two or more.

Further, one or more other commonly used binder resins for electrodes, may be used in combination, within a range that does not impair the characteristics of the present invention, preferably within a range of less than 50 mass%, more preferably less than 30 mass%, particularly preferably less than 10 mass%. However, it is preferable not to use a binder resin other than a polyimide resin.

### <Electrode active material>

An electrode active material used for a positive electrode (a positive electrode active material) of the all-solid secondary battery of the present invention, is not particularly limited as long as it can reversibly insert and release lithium ions. Any known positive electrode active material may be used. The positive electrode active material may be used alone or in combination of two or more.

The positive electrode active material includes, for example, lithium and a transition metal oxide containing one or more transition metal elements selected from Co, Ni, Fe, Mn, Cu and V. In addition, a positive electrode active material can also be used, wherein a part of these transition metal elements is replaced with an element of Group 1 (Ia) in the periodic table other than lithium, an element of Group 2 (IIa) in the periodic table, Al, Ga, In, Ge, Sn, Pb, Sb, Bi, Si, P, B and the like.

More specifically, the positive electrode active material comprises (1) a transition metal oxide having a layered rock salt structure, (2) a transition metal oxide having a spinel structure, (3) a lithium containing transition metal phosphate compound, (4) a lithium containing transition metal halogenated phosphate compound, (5) a lithium containing transition metal silicate compound, and the like. Among them, (1) a transition metal oxide having a layered rock salt structure, is preferable as the positive electrode active material.

(1) The transition metal oxide having a layered rock salt structure includes, for example, LiCoO₂ (lithium cobalt oxide [LCO]), LiNi₂O₂ (lithium nickel oxide), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), LiNi_{0.5}Mn_{0.5}O₂ (lithium manganese nickel oxide), and the like.
(2) The transition metal oxides having a spinel structure includes, for example, LiMn₂O₄ (LMO), LiCoMnO₄, Li₂FeMn₃O₈, Li₂CuMn₃O₈, Li₂CrMn₃O₈, Li₂NiMn₃O₈, and the like.
(3) The lithium containing transition metal phosphate compound includes, for example, an olivine-type iron phosphate such as LiFePO₄ and Li₃Fe₂(PO₄)₃, an iron pyrophosphate such as LiFeP₂O₇, a cobalt phosphate such as LiCoPO₄, a monoclinic NASICON type vanadium phosphate such as Li₃V₂(PO₄)₃ (lithium vanadium phosphate), and the like.
(4) The lithium containing transition metal halogenated phosphate compound includes, for example, an iron fluorinated phosphate such as Li₂FePO₄F, a manganese fluorinated phosphate such as Li₂MnPO₄F, and a cobalt fluorinated phosphate such as Li₂CoPO₄F, and the like.
(5) The lithium containing transition metal silicate compound includes, for example, Li₂FeSiO₄, Li₂MnSiO₄, Li₂CoSiO₄, and the like.

An average particle diameter of the positive electrode active material is not particularly limited, but normally 0.1 to 50 µm is preferable.

An electrode active material used for a negative electrode (a negative electrode active material) of the all-solid secondary battery of the present invention, is not particularly limited as long as it can reversibly insert and release lithium ions. Any known negative electrode active material may be used. The negative electrode active material may be used alone or in combination of two or more.

The negative electrode active material includes, for example, a carbonaceous material, a metal oxide such as tin oxide and silicon oxide, a metal composite oxide, a single substance of lithium, a lithium alloy such as lithium aluminum alloy, and a metal capable of forming an alloy with lithium such as Sn and Si, and the like. Among them, a carbonaceous material or a lithium composite oxide is preferable as the negative electrode active material. The metal composite oxide is not particularly limited, but preferably contains titanium and/or lithium.

The carbonaceous material used as the negative electrode active material is a carbonaceous material consisting essentially of carbon. The carbonaceous material includes, for example, a carbonaceous material obtained by firing petroleum pitch, carbon black such as acetylene black (AB), natural graphite, an artificial graphite such as a vapor phase growth graphite, various synthetic resins such as a PAN (polyacrylonitrile) based resin and a furfuryl alcohol resin, and the like. Further, the carbonaceous material includes various carbon fibers such as PAN based carbon fibers, cellulose based carbon fibers, pitch based carbon fibers, vapor phase growth carbon fibers, dehydrated PVA (polyvinyl alcohol) based carbon fibers, lignin carbon fibers, glassy carbon fibers, activated carbon fibers, and the like, mesophase microspheres, graphite whiskers, flat graphite, and the like.

The metal oxide and the metal composite oxide used as the negative electrode active material are particularly preferably an amorphous oxide, and chalcogenide which is a reaction product of a metal element and an element of Group 16 in the periodic table, is also preferable. Among the group of compounds consisting of amorphous oxides and chalcogenides, amorphous oxides of semimetal elements and chalcogenides are preferable. More preferable are oxides composed of one kind or a combination of two or more kinds of elements of Group 13 (IIIB) to Group 15 (VB) in the periodic table, Al, Ga, Si, Sn, Ge, Pb, Sb and Bi, and chalcogenides. Preferable amorphous oxides and chalcogenides include, for example, Ga₂O₃, SiO, GeO, SnO, SnO₂, PbO, PbO₂, Pb₂O₃, Pb₂O₄, Pb₃O₄, Sb₂O₃, Sb₂O₄, Sb₂Os, Bi₂O₃, Bi₂O₄, SnSiO₃, GeS, SnS, SnS₂, PbS, PbS₂, Sb₂S₃, Sb₂S₅, SnSiS₃ and the like. Further, these may be composite oxides with lithium oxide, for example, Li₂SnO₂.

The negative electrode active material preferably contains a titanium atom. The negative electrode active material containing a titanium atom includes, for example, Li₄Ti₅O₁₂ (lithium titanate [LTO]), and the like.

It is also preferable to use a negative electrode active material containing Si element as the negative electrode active material. Generally, a negative electrode using the negative electrode active material containing Si element can occlude more Li ions than a conventional negative electrode using carbon (graphite, acetylene black, etc.) as a negative electrode active material, and has higher battery capacity.

An average particle diameter of the negative electrode active material is not particularly limited, but usually 0.1 to 60 µm is preferable.

### <Electrode active material layer>

The electrode active material layer in the electrode for an all-solid secondary battery of the present invention comprises the binder resin containing the polyimide resin as described above and the electrode active material.

When the electrode is a positive electrode, a content of the positive electrode active material in the electrode active material layer is not particularly limited, but is usually preferably 10 to 95 mass%, more preferably 55 to 80 mass%. A content of the binder resin in the electrode active material layer is not particularly limited, but is preferably 5 to 90 mass%, more preferably 20 to 45 mass%.

When the electrode is a negative electrode, a content of the negative electrode active material in the electrode active material layer is not particularly limited, but is usually preferably 10 to 80 mass%, more preferably 20 to 70 mass%. A content of the binder resin in the electrode active material layer is not particularly limited, but is preferably 20 to 90 mass%, more preferably 30 to 80 mass%.

The electrode active material layer may further include a conductive auxiliary agent, if necessary. The conductive auxiliary agent aids electron conductivity, and is not particularly limited, and any one of those generally used in all-solid secondary batteries may be used.

The conductive auxiliary agent includes, for example, graphites such as natural graphite and artificial graphite; carbon blacks such as acetylene black, Ketjen black and furnace black; amorphous carbons such as needle coke; carbon fibers such as vapor phase growth carbon fibers and carbon nanotubes; carbonaceous materials such as graphene and fullerene; metal powders such as copper and nickel; metal fibers; conductive polymers such as poly aniline, polypyrrole, polythiophene, polyacetylene and polyphenylene derivatives. The conductive auxiliary agent may be used alone or in combination of two or more.

A content of the conductive auxiliary agent in the electrode active material layer is not particularly limited, but usually 5 mass% or less is preferable.

An additive such as a surfactant for improving coatability may be added to the electrode active material layer, if necessary.

A thickness of the electrode active material layer is not particularly limited, but is usually preferably 1 to 1000 µm, more preferably 3 to 500 µm for both the positive electrode and the negative electrode.

The mass (mg) of the positive electrode active material per unit area (cm²) of the positive electrode active material layer (mass per unit area) is not particularly limited, and may be appropriately selected according to the desired battery capacity. The mass (mg) of the negative electrode active material per unit area (cm²) of the negative electrode active material layer (mass per unit area) is not particularly limited, and may be appropriately selected according to the desired battery capacity.

### <Current collector>

The current collector used for the electrode of an all-solid secondary battery of the present invention is preferably an electron conductor that does not cause a chemical change.

A material for forming the current collector of the positive electrode includes, for example, aluminum, an aluminum alloy, stainless steel, nickel, titanium and the like. Aluminum, an aluminum alloy or stainless steel whose surface is treated with carbon, nickel, titanium, silver or the like (to form a thin film) can also be used. Among them, the current collector of the positive electrode is preferably aluminum or an aluminum alloy.

A material for forming the current collector of the negative electrode includes, for example, aluminum, copper, a copper alloy, stainless steel, nickel, titanium and the like. Aluminum, copper, a copper alloy or stainless steel whose surface is treated with carbon, nickel, titanium, silver or the like (to form a thin film) can also be used. Among them, the current collector of the negative electrode is preferably aluminum, copper, a copper alloy or stainless steel.

As a shape of the current collector, a foil shape (film sheet shape) is usually used. However, a net shape, a punched shape, a porous material, a molded body of fibers, and the like can also be used. Further, the current collector may have roughness on the surface by surface treatment.

A thickness of the current collector is not particularly limited, but usually 1 to 500 µm is preferable.

### <Method of producing electrode>

The electrode for an all-solid secondary battery of the present invention can be produced by preparing an electrode mixture paste which comprises an electrode active material, a polyimide resin as a binder resin or a precursor thereof, and a solvent, but does not contain an electrolyte; applying the electrode mixture paste onto a current collector; and drying or heat-treating the applied electrode mixture paste to form an electrode active material layer. The electrode mixture paste can be prepared by mixing and slurrying the electrode active material, the binder resin or its precursor and the solvent.

Examples of a method of producing the electrode using the polyimide resin as a binder resin are schematically shown below.
(1) A method of producing an electrode (thermal imidization) by casting on a current collector a polyimide precursor solution composition (an electrode mixture paste) obtained by adding an electrode active material and a conductive auxiliary agent, etc. to a solution of a polyimide precursor (particularly polyamic acid), and if necessary, further selecting and adding an imidization catalyst, an organic phosphorus containing compound and a dehydrating agent, etc.; and performing dehydration cyclization and desolvation by heating so as to convert the polyimide precursor into the polyimide and to form an electrode active material layer on the current collector.
(2) A method of producing an electrode (chemical imidization) by casting on a current collector a polyimide precursor solution composition (an electrode mixture paste) obtained by adding an electrode active material and a conductive auxiliary agent, etc. to a solution of a polyimide precursor (particularly polyamic acid), and further adding a cyclization catalyst and a dehydrating agent; and performing chemically dehydration cyclization and desolvation by heating and imidization so as to convert the polyimide precursor into the polyimide and to form an electrode active material layer on the current collector.
(3) In case that the polyimide is soluble in an organic solvent, a method of producing an electrode by casting on a current collector a polyimide solution composition (an electrode mixture paste) obtained by adding an electrode active material and a conductive auxiliary agent, etc. to a solution of the polyimide; and performing desolvation by heating to form an electrode active material layer on the current collector.

First, production of the polyimide precursor solution and the polyimide solution is described. The polyimide precursor solution or the polyimide solution can be obtained by polymerizing approximately equimolar amounts of tetracarboxylic acid components and diamine components in an organic solvent or in water. The reaction method is preferably a method of adding tetracarboxylic acid components at once or separately to a solution in which diamine components are dissolved in a solvent (organic solvent or water), and heating for polymerization.

A molar ratio of the tetracarboxylic acid components and the diamine components (tetracarboxylic acid components / diamine components) is preferably approximately equimolar, specifically 0.95 to 1.05, preferably 0.97 to 1.03.

Alternatively, after the two or more polyimide precursors in which either of the components is excessive, are synthesized, the two or more precursors solutions may be combined, and mixed under reaction conditions.

The organic solvent is not particularly limited, but includes, for example, an amide solvent such as N,N-dimethylformamide, N,N-dimethylacetamide, N,N-diethylacetamide, N-methyl-2-pyrrolidone, N-ethyl-2-pyrrolidone and N-vinyl-2-pyrrolidone; a cyclic ester solvent such as γ-butyrolactone, γ-valerolactone, δ-valerolactone, γ-caprolactone, ε-caprolactone and α-methyl-γ-butyrolactone; a carbonate solvent such as ethylene carbonate and propylene carbonate; a glycol solvent such as triethylene glycol; a phenol solvent such as phenol, o-cresol, m-cresol, p-cresol, 3-chlorophenol and 4-chlorophenol; and acetophenone, 1,3-dimethyl-2-imidazolidinone, sulfolane, dimethyl sulfoxide and the like. Common organic solvents may also be used, which include, for example, an alcohol solvent such as methanol and ethanol; an ester solvent such as butyl acetate, ethyl acetate, isobutyl acetate, ethyl propionate, ethyl butyrate, butyl butyrate, butyl benzoate, ethyl benzoate and methyl benzoate; and propylene glycol methyl acetate, ethyl cellosolve, butyl cellosolve, 2-methyl cellosolve acetate, ethyl cellosolve acetate, butyl cellosolve acetate, tetrahydrofuran, dimethoxyethane, diethoxyethane, dibutyl ether, diethylene glycol dimethyl ether, methyl isobutyl ketone, diisobutyl ketone, cyclopentanone, cyclohexanone, methyl ethyl ketone, acetone, butanol, ethanol, xylene, toluene, chlorobenzene, N-methylcaprolactam, hexamethylphosphorotriamide, bis(2-methoxyethyl) ether, 1,2-bis(2-methoxyethoxy)ethane, bis[2-(2-methoxyethoxy)ethyl] ether, 1,4-dioxane, dimethyl sulfoxide, dimethyl sulfone, diphenyl ether, diphenyl sulfone, tetramethylurea, anisole, terpene, a mineral spirit, petroleum naphtha solvent, biodegradable methyl lactate, ethyl lactate, butyl lactate, and others. The organic solvent used may be one kind of the organic solvent, or two or more kinds thereof.

When water is used as the solvent, an imidazole such as 1,2-dimethylimidazole or a base such as triethylamine is preferably added in an amount of 0.8 or more equivalents to the carboxyl groups in the polyamic acid (a polyimide precursor) to be produced.

When carrying out the polymerization reaction for obtaining the polyimide precursor solution and the polyimide solution respectively, a concentration of the total monomers in the organic solvent (substantially equal to the solid content concentration of the polyimide precursor solution or the polyimide solution) may be appropriately selected according to the kind of the monomers used, and the like. The solid content concentration of the obtained polyimide precursor solution or the polyimide solution is not particularly limited, but is preferably 3 to 45 mass%, more preferably 5 to 40 mass%, further preferably 7 to 30 mass% with respect to the total amount of the polyimide precursor or polyimide and the solvent. When the solid content concentration is lower than 3 mass%, productivity and handling at the time of use may be deteriorated. When it is higher than 45 mass%, fluidity of the solution may be lost, and uniform application on the current collector may become difficult.

A solution viscosity of the polyimide precursor solution or the polyimide solution at 30 °C is not particularly limited, but preferably 1000 Pa·s or less, more preferably 0.1 to 500 Pa·s, further preferably 0.1 to 300 Pa·s, particularly preferably 0.1 to 200 Pa·s is suitable for handling. When the solution viscosity exceeds 1000 Pa s, fluidity of the solution may be lost, and uniform application on the current collector may become difficult. When it is less than 0.1 Pa·s, dripping, cissing, etc. may occur during application on the current collector, and it may be difficult to obtain an electrode active material layer and an electrode having high characteristics.

As an example of a method of producing the polyimide precursor solution, the polymerization reaction of the tetracarboxylic acid components and the diamine components is performed, by mixing, for example, at a substantially equimolar amount of both components, or at a slightly excessive amount of either components (the tetracarboxylic acid components or the diamine components), and by reacting, for example, at a reaction temperature of 100 °C or lower, preferably 80 °C or lower for about 0.2 to 60 hours, to obtain the polyimide precursor solution.

As an example of a method of producing the polyimide solution, the polymerization reaction of the tetracarboxylic acid components and the diamine components is performed, by mixing, for example, at a substantially equimolar amount of both components, or at a slightly excessive amount of either components (the tetracarboxylic acid components or the diamine components), and by reacting, for example, at a reaction temperature of 120 °C or higher, preferably 140 °C or higher, more preferably 160° C or higher, and preferably 250 °C or lower, more preferably 230 °C or lower for about 0.5 to 60 hours, according to a known method, to obtain the polyimide solution.

The polymerization reaction may be performed under an air atmosphere, but is usually performed under an inert gas atmosphere (for example, under an argon gas atmosphere, a helium gas atmosphere, a nitrogen gas atmosphere), preferably under a nitrogen gas atmosphere.

The polyimide precursor solution or the polyimide solution thus obtained may be used for forming the electrode active material layer and producing the electrode, as it is, or after removing the solvent or adding a new solvent, if necessary.

In the thermal imidization (Method 1), an imidization catalyst, an organic phosphorus containing compound, or the like may be added to the polyimide precursor solution, if necessary. In the chemical imidization (Method 2), a cyclization catalyst, a dehydrating agent, or the like may be added to the polyimide precursor solution, if necessary.

The imidization catalyst includes a substituted or unsubstituted nitrogen containing heterocyclic compound, an N-oxide compound of the nitrogen containing heterocyclic compound, a substituted or unsubstituted amino acid compound, an aromatic hydrocarbon compound having a hydroxyl group, and an aromatic heterocyclic compound having a hydroxyl group. Particularly, a lower alkyl imidazole such as 1,2-dimethylimidazole, N-methylimidazole, N-benzyl-2-methylimidazole, 2-methylimidazole and 2-ethyl-4-methylimidazole; a benzimidazole such as 5-methylbenzimidazole; isoquinoline; a substituted pyridine such as 3,5-dimethylpyridine, 3,4-dimethylpyridine, 2,5-dimethylpyridine, 2,4-dimethylpyridine and 4-n-propylpyridine may be preferably used. An amount of the imidization catalyst used is preferably 0.01 to 2 times equivalent, more preferably 0.02 to 1 times equivalent to the amic acid unit of the polyamic acid.

The organic phosphorus containing compound includes, for example, a phosphate ester such as monocaproyl phosphate, monooctyl phosphate, monolauryl phosphate, monomyristyl phosphate, monocetyl phosphate, monostearyl phosphate, triethylene glycol monotridecyl ether monophosphate, tetraethylene glycol monolauryl ether monophosphate, diethylene glycol monostearyl ether monophosphate, dicaproyl phosphate, dioctyl phosphate, dicapryl phosphate, dilauryl phosphate, dimyristyl phosphate, dicetyl phosphate, distearyl phosphate, tetraethylene glycol mononeopentyl ether diphosphate, triethylene glycol monotridecyl ether diphosphate, tetraethylene glycol monolauryl ether diphosphate, and diethylene glycol monostearyl ether diphosphate; and amine salts of these phosphate esters. The amine includes, for example, ammonia, monomethylamine, monoethylamine, monopropylamine, monobutylamine, dimethylamine, diethylamine, dipropylamine, dibutylamine, trimethylamine, triethylamine, tripropylamine, tributylamine, monoethanolamine, diethanolamine, triethanolamine, and the like.

The cyclization catalyst includes an aliphatic tertiary amine such as trimethylamine and triethylenediamine; an aromatic tertiary amine such as dimethylaniline; and a heterocyclic tertiary amine such as isoquinoline, pyridine, α-picoline and β-picoline, and the like.

The dehydrating agent includes an aliphatic carboxylic anhydride such as acetic anhydride, propionic anhydride and butyric anhydride; an aromatic carboxylic anhydride such as benzoic anhydride, and the like.

The electrode can be produced by adding to the polyimide precursor solution or polyimide solution thus obtained, the electrode active material, and further, if necessary, a conductive auxiliary agent or other additives and mixing to prepare an electrode mixture paste; casting or applying the prepared electrode mixture paste onto a current collector; and imidizing and desolvating (desolvating mainly in the case of a polyimide solution) by heat treatment preferably under a reduced pressure to form an electrode active material layer on the current collector.

The method of casting the electrode mixture paste onto the current collector is not particularly limited, and an example thereof includes a conventionally known method such as a spin coating method, a screen printing method, a bar coater method and an electrodeposition method.

The condition of the heat treatment in the case of using the polyimide precursor solution is not particularly limited, but the heat treatment may be performed at a maximum heating temperature of, for example, 150 °C to 600 °C, preferably 200 °C to 550 °C, more preferably 250 °C to 500 °C after drying, for example, in a temperature range of 50 °C to 150 °C. The condition of the heat treatment in the case of using the polyimide solution is not particularly limited, but the heat treatment may be performed at a maximum heating temperature of, for example, 100 °C to 600 °C, preferably 150 °C to 500 °C, more preferably 200 °C to 450 °C.

The heat treatment may be performed under an air atmosphere, but is usually performed under an inert gas atmosphere (for example, under an argon gas atmosphere, a helium gas atmosphere, a nitrogen gas atmosphere), preferably under a nitrogen gas atmosphere.

### 2. All-solid secondary battery

The all-solid secondary battery of the present invention comprises a positive electrode, a negative electrode, and a solid electrolyte layer disposed between them, wherein the positive electrode and/or the negative electrode are the above electrode for an all-solid secondary battery of the present invention. More specifically, the all-solid secondary battery of the present invention comprises a negative electrode current collector, a negative electrode active material layer, a solid electrolyte layer, a positive electrode active material layer, and a positive electrode current collector in this order, wherein the negative electrode active material layer and/or the positive electrode active material layer does not contain an electrolyte. Further, as described later, when the positive electrode is the electrode for an all-solid secondary battery of the present invention, the negative electrode may not be the electrode for an all-solid secondary battery of the present invention, and the negative electrode may be, for example, a sheet of a carbonaceous material, or a metal foil or the like. In such case, the all-solid secondary battery of the present invention may comprise a negative electrode, a solid electrolyte layer, a positive electrode active material layer containing no electrolyte, and a positive electrode current collector in this order. When the negative electrode is the electrode for an all-solid secondary battery of the present invention, the positive electrode may not be the electrode for an all-solid secondary battery of the present invention, and the positive electrode may be, for example, a metal foil such as a lithium foil. In such case, the all-solid secondary battery of the present invention may comprise a negative electrode current collector, a negative electrode active material layer containing no electrolyte, a solid electrolyte layer, and a positive electrode in this order.

The all-solid secondary battery of the present invention may appropriately comprise a functional layer or member, etc. in addition to the negative electrode (the negative electrode current collector and the negative electrode active material layer), the solid electrolyte layer, and the positive electrode (the positive electrode active material layer and the positive electrode current collector). Each layer may be composed of a single layer or multiple layers. In case of forming a dry battery, for example, a negative electrode (negative electrode current collector and negative electrode active material layer), a solid electrolyte layer, and a positive electrode (a positive electrode active material layer and a positive electrode current collector), which are the basic structure of an all-solid secondary battery, are enclosed in a suitable housing. The housing may be made of a metal such as aluminum alloy and stainless steel, or may be made of a resin such as a plastic. The metallic housing is preferably divided into a housing on the positive electrode side and a housing on the negative electrode side, both of which are electrically connected to the positive electrode current collector and the negative electrode current collector, respectively. The housing on the positive electrode side and the housing on the negative electrode side are preferably joined and integrated via a gasket for preventing a short circuit.

### <Solid electrolyte layer>

A solid electrolyte layer of the all-solid secondary battery of the present invention is a layer containing a solid electrolyte.

The solid electrolyte layer is preferably a layer made of, for example, a polymer solid electrolyte (an intrinsic polymer solid electrolyte composed only of a solid polymer). The polymer solid electrolyte is not particularly limited, and any known polymer solid electrolyte may be used. For example, polyethylene oxide polymer, polypropylene oxide polymer, perfluorocarbon sulfonic acid polymer, sulfonated polyether ether ketone, sulfonated polyether sulfone, and other aromatic hydrocarbon polymer electrolytes having an ionic group, etc. may be used.

Further, for example, a composite electrolyte membrane in which the pores of a porous base material are filled with a crosslinked aromatic polymer electrolyte wherein aromatic polymer electrolytes having an ionic group are linked by at least one kind of cross-linking component at a site other than the ionic group, as described in JP 2005-165461, may also be suitably used as the solid electrolyte layer.

Further, the solid electrolyte layer of the all-solid secondary battery of the present invention is also preferably an inorganic solid electrolyte layer comprising an inorganic solid electrolyte and a binder resin (a solid electrolyte layer binder resin). The inorganic solid electrolyte layer is described below.

### <Inorganic solid electrolyte layer>

A content of the inorganic solid electrolyte in the solid electrolyte layer is not particularly limited, but is usually preferably 80 to 99.9 mass%, more preferably 90 to 99.7 mass%, further preferably 95 to 99.5 mass%.

A content of the binder resin in the solid electrolyte layer is not particularly limited, but is usually preferably 0.1 to 20 mass%, more preferably 0.3 to 10 mass%, particularly preferably 0.5 to 5 mass%.

The solid electrolyte layer may further contain one or two or more lithium salts, if necessary. The lithium salt is not particularly limited, and any known lithium salt generally used in all-solid secondary batteries can be used. The lithium salt includes, for example, an inorganic lithium salt such as an inorganic fluoride salt such as LiPF₆, LiBF₄, LiAsF₆ and LiSbF₆; a perhalogenate such as LiClO₄, LiBrO₄ and LiIO₄, and an inorganic chloride such as LiAlCl₄,; a perfluoroalkane sulfonate such as LiCF₃SO₃, and the like; a fluorine containing organic lithium salt such as a perfluoroalkanesulfonylimide salt such as LiN(CF₃SO₂)₂, LiN(CF₃CF₂SO₂)₂, LiN(FSO₂)₂ and LiN(CF₃SO₂)(C₄F₉SO₂); a perfluoroalkanesulfonylmethide salt such as LiC(CF₃SO₂)₃; a fluoroalkyl fluorinated phosphate such as Li[PF₅(CF₂CF₂CF₃)], Li[PF₄(CF₂CF₂CF₃)₂], Li[PF₃(CF₂CF₂CF₃)₃], Li[PF₅(CF₂CF₂CF₂CF₃)], Li[PF₄(CF₂CF₂CF₂CF₃)₂] and Li[PF₃(CF₂CF₂CF₂CF₃)₃], and the like; and an oxalatoborate salt such as lithium bis(oxalato)borate and lithium difluorooxalatoborate, and the like.

A content of the lithium salt in the solid electrolyte layer is not particularly limited, but is usually preferably more than 0 parts by mass with respect to 100 parts by mass of the inorganic solid electrolyte. It is usually more preferably 0.1 to 10 parts by mass, still more preferably 0.5 to 50 parts by mass with respect to 100 parts by mass of the inorganic solid electrolyte..

A thickness of the solid electrolyte layer is not particularly limited, but is usually preferably 1 to 1000 µm, more preferably 3 to 500 µm.

### (Inorganic solid electrolyte)

The inorganic solid electrolyte used in the present invention is not particularly limited. Any known inorganic solid electrolyte used in all-solid secondary batteries may be used, as long as it contains a metal belonging to Group 1 or 2 in the periodic table (preferably lithium), and has conductivity of an ion of the metal (preferably lithium). The inorganic solid electrolyte may be used alone or in combination of two or more.

The inorganic solid electrolyte includes, for example, (1) sulfide-based inorganic solid electrolyte and (2) oxide-based inorganic solid electrolyte.

(1) Sulfide-based inorganic solid electrolyte is preferably one which contains a sulfur atom (S) and a metal belonging to Group 1 or 2 in the periodic table, and has ionic conductivity and an electronic insulating property. The sulfide-based inorganic solid electrolyte includes ones represented by the following formula:

LiₐM_{b}P_{c}S_{d}

wherein, M is an element selected from B, Zn, Sn, Si, Cu, Ga, Sb, Al and Ge; and
a to d represent the composition ratio of each element, and a : b : c : d = 1 to 12 : 0 to 1 : 1 : 2 to 9, preferably a : b : c : d = 1 to 9 : 0 : 1 : 3 to 7, more preferably a : b : c : d = 1.5 to 4 : 0 : 1 : 3.25 to 4.5.

The ratio of Li₂S and P₂S₅ in the Li-P-S solid electrolyte containing Li, P and S is preferably Li₂S : P₂S₅ = 60 : 40 to 90 : 10 (molar ratio), and more preferably Li₂S : P₂S₅ = 68 : 32 to 78 : 22.

The sulfide-based inorganic solid electrolyte may be amorphous, crystallized, or only partly crystallized.

The sulfide-based inorganic solid electrolyte also includes, for example, a raw material composition containing Li₂S and a sulfide of an element of Group 13 to Group 15. More specifically, the combination of raw materials includes Li₂S-P₂S₅, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-LiI, Li₂S-SiS₂-Li₄SiO₄, Li₂S-SiS₂-Li₃PO₄, Li₁₀GeP₂S₁₂, and the like. The combination ratio of respective raw materials may be appropriately selected. A method of synthesizing the sulfide-based inorganic solid electrolyte using such a raw material composition includes, for example, an amorphization method such as a mechanical milling method and a melt-quenching method.

The sulfide-based inorganic solid electrolytes can be synthesized according to, for example, Journal of Power Sources, 233, (2013), pp. 231-235, and Chem. Lett., (2001), pp. 872-873 and the like.

(2) Oxide-based inorganic solid electrolyte is preferably one which contains an oxygen atom (O) and a metal belonging to Group 1 or 2 in the periodic table, and has ionic conductivity and an electronic insulating property.

The oxide-based inorganic solid electrolyte includes, for example, LiₓLa_{y}TiO₃ (LLT) wherein x = 0.3 to 0.7 and y = 0.3 to 0.7; Li₇La₃Zr₂O₁₂ (LLZ, lithium lanthanum zirconate); Li_{3.5}Zn_{0.25}GeO₄ having the LISICON crystal structure; LiTi₂P₃O₁₂ having the NASICON crystal structure; Li₁₊ₘ₊ₙ(Al,Ga)ₘ(Ti,Ge)₂₋ₘSiₙP₃₋ₙO₁₂ wherein 0 ≤ m ≤ 1, 0 ≤ n ≤ 1; and Li₇La₃Zr₂O₁₂ having the garnet-type crystal structure, and the like.

The oxide-based inorganic solid electrolyte also includes a phosphorus compound containing, for example, Li, P and O. More specifically, the oxide-based inorganic solid electrolyte includes, for example, lithium phosphate (Li₃PO₄), LiPON obtained by substituting a part of oxygen atoms of lithium phosphate with nitrogen atoms, and LiPOD wherein D is at least one selected from Ti, V, Cr, Mn, Fe, Co, Ni, Cu, Zr, Nb, Mo, Ru, Ag, Ta, W, Pt, Au, etc., and the like. The oxide-based inorganic solid electrolyte also includes LiAON wherein A is at least one selected from Si, B, Ge, Al, C, Ga, etc., and the like.

An average particle diameter of the inorganic solid electrolyte is not particularly limited, but is usually preferably 0.01 to 100 µm, more preferably 0.1 to 50 µm.

### (Binder resin in solid electrolyte layer)

The binder resin in the solid electrolyte layer used in the present invention is not particularly limited, and any binder resin generally used in all-solid state secondary batteries can be used. One kind of the binder resins in the solid electrolyte layer may be used alone, or a combination of two or more thereof may be used.

The binder resin in the solid electrolyte layer includes, for example, a fluororesin such as polytetrafluoroethylene (PTFE), polyvinylene difluoride (PVdF), and a copolymer of polyvinylene difluoride and hexafluoropropylene (PVdF-HFP); a hydrocarbon thermoplastic resin such as polyethylene, polypropylene, styrene butadiene rubber (SBR), hydrogenated styrene butadiene rubber (HSBR), butylene rubber, acrylonitrile butadiene rubber, polybutadiene and polyisoprene; an acrylic resin such as a copolymer of (meth)acrylic acid and alkyl (meth)acrylate such as methyl (meth)acrylate, a copolymer of methyl (meth)acrylate and styrene, a copolymer of methyl (meth)acrylate and acrylonitrile, a copolymer of butyl (meth)acrylate and acrylonitrile and styrene, and further a polyurethane resin, a polyurea resin, a polyamide resin, a polyimide resin, a polyester resin, a polyether resin, a polycarbonate resin, a cellulose derivative resin and the like.

### <Electrode other than the electrode for an all-solid secondary battery of the present invention>

When in the all-solid secondary battery of the present invention, the positive electrode is the electrode for an all-solid secondary battery of the present invention in which the electrode active material layer does not contain an electrolyte, the negative electrode may be one having an electrode active material layer containing an electrolyte on a current collector, or a sheet of a carbonaceous material, a metal (including alloy) or a metal oxide, etc. When the negative electrode is the electrode for an all-solid secondary battery of the present invention in which the electrode active material layer does not contain an electrolyte, the positive electrode may be one having an electrode active material layer containing an electrolyte on the current collector, or a sheet of a metal (including alloy) or a metal oxide, etc.

The electrode having an electrode active material layer containing an electrolyte on a current collector is one similar to the electrode for an all-solid secondary battery of the present invention as described above, except that the electrode is an electrode having on the current collector an electrode active material layer containing an electrode active material, a binder resin and a solid electrolyte, preferably an inorganic solid electrolyte; the electrode active material layer contains an electrolyte; and the binder resin does not need to be a polyimide resin.

A content of the inorganic solid electrolyte in the electrode active material layer (the positive electrode active material layer and the negative electrode active material layer) is not particularly limited, but is usually preferably 10 to 40 mass%, more preferably 20 to 30 mass%. The inorganic solid electrolyte contained in the electrode active material layer is not particularly limited, but includes, for example, ones similar to the inorganic solid electrolyte used in the above-mentioned solid electrolyte layer. One kind of the inorganic solid electrolyte may be used alone, or two or more kinds thereof may be used in combination.

The binder resin used in the electrode active material layer containing an electrolyte is not particularly limited, and any conventionally known positive electrode binder resin and negative electrode binder resin can be used. The binder resin includes, for example, a fluororesin such as polytetrafluoroethylene (PTFE), polyvinylidene fluoride (PVdF), and polyvinylidene fluoride-hexafluoropropylene copolymer (PVdF-HFP); a hydrocarbon resin such as polyethylene, polypropylene, styrene butadiene rubber (SBR), hydrogenated styrene butadiene rubber (HSBR), butylene rubber, acrylonitrile butadiene rubber, polybutadiene and polyisoprene; an acrylic resin, a styrene resin, an amide resin, an acrylamide resin, an imide resin, an urethane resin, an urea resin, a polyester resin, a polyether resin, a phenol resin, an epoxy resin, a polycarbonate resin, a silicone resin and the like. Further, the binder resin includes, for example, an anionic polymer such as polyacrylic acid, polymethacrylic acid, polysulfonic acid, and salts thereof; a cellulose such as carboxyalkyl cellulose and hydroxyalkyl cellulose; and polyvinyl alcohol, polyalkylene glycol, polyvinylpyrrolidone, alginic acid, and salts thereof, and the like. Further, as the binder resin used for the electrode active material layer containing an electrolyte, the above mentioned polyimide resin may be also used. Also in the electrode active material layer containing an electrolyte, one kind of the binder resin may be used alone, or two or more kinds thereof may be used in combination.

The electrode is not limited to one having an electrode active material layer on the current collector. For example, only a sheet made of an electrode active material or a current collector having no electrode active material layer may be used as an electrode. Specifically, a sheet of a carbonaceous material or a sheet of a metal (including alloy) or a metal oxide may be used as the negative electrode, and among them, a sheet of a carbonaceous material may be preferably used. A sheet of a metal (including alloy) or a metal oxide may be used as the positive electrode, and among them, a lithium foil or a sheet of a lithium containing compound such as a lithium containing transition metal oxide, particularly preferably a lithium foil may be preferably used.

### <Method of producing the all-solid secondary battery>

The all-solid secondary battery of the present invention can be produced by preparing a positive electrode sheet and a negative electrode sheet respectively, which are the electrodes for an all-solid secondary battery of the present invention, as described above; preparing separately from these, a solid electrolyte containing sheet containing a solid electrolyte as described above; and laminating and integrating the positive electrode sheet, the solid electrolyte containing sheet and the negative electrode sheet by a dry method. Even in the case of using the electrode other than the electrode for an all-solid secondary battery of the present invention, that is, the electrode having an electrode active material layer containing an electrolyte on a current collector, or a sheet of a carbonaceous material, a metal (including alloy) or a metal oxide, etc., the all-solid secondary battery of the present invention can be similarly produced by preparing a positive electrode sheet and a negative electrode sheet respectively (preparing a sheet in case of using the sheet of a carbonaceous material or the sheet of a metal (including alloy) or a metal oxide, etc.); preparing separately from these, a solid electrolyte containing sheet; and laminating and integrating the positive electrode sheet, the solid electrolyte containing sheet and the negative electrode sheet.

### (Preparation of solid electrolyte containing sheet)

The solid electrolyte containing sheet can be prepared by mixing and slurrying the solid electrolyte, the binder resin for the solid electrolyte layer, and a solvent as described above, and to prepare a solid electrolyte containing paste; applying the paste on a substrate; drying to form a solid electrolyte layer on the substrate; and peeling the formed solid electrolyte layer from the substrate.

The mixing condition for preparing the solid electrolyte containing paste is not particularly limited, and may be appropriately selected. When a lithium salt or other additives are contained in the solid electrolyte layer, they may be added in the solvent and mixed at the same time as the solid electrolyte and the binder resin are, or may be separately added and mixed.

The solvent of the solid electrolyte containing paste is not particularly limited, and any commonly used solvent can be used. The solvent includes, for example, an alcohol solvent such as methanol, ethanol, 1-propanol, 2-propanol, 2-butanol, ethylene glycol, propylene glycol, glycerin, 1,6-hexanediol, cyclohexanediol, sorbitol, xylitol, 2-methyl-2,4-pentanediol, 1,3-butanediol and 1,4-butanediol; an ether solvent such as alkylene glycol alkyl ethers (ethylene glycol monomethyl ether, ethylene glycol monobutyl ether, diethylene glycol, dipropylene glycol, propylene glycol monomethyl ether, diethylene glycol monomethyl ether, triethylene glycol, polyethylene glycol, propylene glycol monomethyl ether, dipropylene glycol monomethyl ether, tripropylene glycol monomethyl ether, diethylene glycol monobutyl ether, diethylene glycol monobutyl ether, etc.), dimethyl ether, diethyl ether, tetrahydrofuran, cyclopentyl methyl ether, dimethoxyethane and 1,4-dioxane; an amide solvent such as N,N-dimethylformamide, N-methyl-2-pyrrolidone, N-ethyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropionamide and hexamethylphosphoric triamide; a ketone solvent such as acetone, methyl ethyl ketone, methyl isobutyl ketone, diethyl ketone, dipropyl ketone, diisopropyl ketone, diisobutyl ketone and cyclohexanone; an aromatic hydrocarbon solvent such as benzene, toluene, xylene, chlorobenzene and dichlorobenzene; an aliphatic hydrocarbon solvent such as hexane, heptane, octane, decane and dodecane; an alicyclic hydrocarbon solvent such as cyclohexane, cycloheptane, cyclooctane and cyclononane; an ester solvent such as ethyl acetate, propyl acetate, butyl acetate, ethyl butyrate, butyl butyrate, butyl valerate and γ-butyrolactone; a carbonate solvent such as ethylene carbonate, dimethyl carbonate, diethyl carbonate, ethyl methyl carbonate and propylene carbonate; a nitrile solvent such as acetonitrile, propionitrile, butyronitrile, isobutyronitrile and benzonitrile. One kind of the solvent may be used alone, or two or more kinds thereof may be used in combination.

A content of the solvent in the solid electrolyte containing paste is not particularly limited, but is usually preferably 20 to 99 mass%, more preferably 25 to 90 mass%, particularly preferably 30 to 80 mass%.

In the solid electrolyte containing paste, the binder resin may be dissolved in the solvent, or insoluble in the solvent.

A substrate on which the solid electrolyte containing paste is applied, is not particularly limited as long as the solid electrolyte layer can be formed on the substrate, and for example, a sheet of an organic material or an inorganic material, etc. may be used. An organic material of the substrate includes, for example, various polymers such as polyethylene terephthalate, polypropylene, polyethylene and cellulose. The inorganic material includes, for example, glass, ceramics and the like.

The method of applying the solid electrolyte containing paste on the substrate is not particularly limited, and may be appropriately selected. The applying method includes, for example, spray coating, spin coating, dip coating, slit coating, stripe coating, and bar coating, etc.

A condition for drying the solid electrolyte containing paste applied on the substrate is not particularly limited, and may be appropriately selected. The drying temperature is not particularly limited, and is usually preferably 30 °C to 300 °C, more preferably 60 °C to 250 °C, further preferably 80 °C to 200 °C. Drying may be performed in vacuum, in the atmosphere, in a dry air, or in an inert gas (for example, in argon gas, helium gas, or nitrogen gas).

The solid electrolyte containing sheet can be obtained by peeling the solid electrolyte layer thus formed from the substrate.

### (Preparation of electrode sheet other than the electrode for an all-solid secondary battery of the present invention)

An electrode having an electrode active material layer containing an electrolyte on a current collector can be produced by mixing and slurrying an electrode active material and a solid electrolyte, preferably an inorganic solid electrolyte, a binder resin for an electrode active material layer, and a solvent as described above to prepare an electrode active material and solid electrolyte containing paste (an electrode mixture paste); applying the paste on the current collector; and drying to form an electrode active material layer on the current collector. Formation of the electrode active material layer can be performed in the same manner as the formation of the solid electrolyte layer of the solid electrolyte containing sheet described above, except that the electrode active material is added.

### (Lamination of the positive electrode sheet, the solid electrolyte containing sheet and the negative electrode sheet)

The an all-solid secondary battery can be produced by laminating and integrating the positive electrode sheet, the solid electrolyte containing sheet, and the negative electrode sheet in this order, using the positive electrode sheet, the negative electrode sheet (the electrode sheet of the present invention) and the solid electrolyte containing sheet produced as described above. After laminating the positive electrode sheet and the solid electrolyte containing sheet, the obtained laminate and the negative electrode sheet may be laminated. Reversing the order, after laminating the negative electrode sheet and the solid electrolyte containing sheet, the obtained laminate and the positive electrode sheet may be laminated.

The positive electrode sheet, the solid electrolyte containing sheet, and the negative electrode sheet may be pressed together to be integrated. The method of pressing the laminate is not particularly limited, and may be appropriately selected. An example thereof is a method using a hydraulic cylinder press, and the like. The pressure applied to the laminate is not particularly limited, but is usually preferably in the range of 50 to 1500 MPa. The atmosphere during pressurization is not particularly limited, and pressurization may be performed, for example, in the atmosphere, in a dry air, or in an inert gas (for example, in argon gas, helium gas, nitrogen gas) or the like. The pressurizing time is not particularly limited, and may be appropriately selected. For example, high pressure may be applied for a short time (for example, within several hours), or medium pressure may be applied for a long time (one day or more).

Further, the laminate of the positive electrode sheet, the solid electrolyte containing sheet, and the negative electrode sheet may be pressed and heated at the same time. The heating temperature is not particularly limited, but is usually in the range of 30 °C to 300 °C.

The applied pressure may be uniform or different with respect to the sheet surface. Further, the magnitude of the applied pressure may be changed during the pressurization.

The thus obtained all-solid secondary battery may be used by enclosing it in a housing, if necessary.

Since the all-solid secondary battery of the present invention has excellent safety and high capacity, it may be suitably used for various applications. For example, the all-solid secondary battery of the present invention may be suitably used for an automobile (an electric vehicle, etc.). Further, it may be suitably used for a mobile phone, a smartphone, a tablet, a small unmanned aircraft (a drone, etc.), and the like.

### EXAMPLE

Hereinafter, the present invention is explained more specifically with reference to examples, but the present invention is not limited only to these examples.

### [Example 1]

Silicon as a negative electrode active material, UPIA-LB-1001 (a polyimide precursor varnish manufactured by Ube Industries, Ltd.) as a binder resin composition for an electrode, and acetylene black as a conductive auxiliary agent were blended in a mass ratio of 73 : 25 : 2 (the amount of UPIA-LB-1001 is the amount of solid content (polyimide precursor)), and NMP (N-methyl-2-pyrrolidone) was added so that the slurry concentration became about 60 mass% to prepare a negative electrode mixture paste. This negative electrode mixture paste was applied onto a nickel-plated steel foil (thickness 10 µm) as a current collector, placed in a vacuum dryer, and heat-treated at 350 °C for 1 hour to prepare an electrode (negative electrode) on which an electrode active material layer having a thickness of 3 µm and no electrolyte was formed.

The prepared negative electrode was cut into a size of 3 cm × 5 cm, a polyethylene oxide-based polymer electrolyte membrane (thickness 80 µm) as a solid electrolyte layer and a lithium foil (thickness 500 µm) as a counter electrode (a positive electrode) were used, and the prepared negative electrode, the solid electrolyte layer and the counter electrode were laminated in this order, and the negative electrode current collector and the positive electrode were connected to prepare an all-solid battery.

The prepared battery was charged and discharged 30 cycles at a constant current of 0.56 mA in a battery voltage range of 1 mV to 1 V under an environment of 60 °C. The discharge capacity at the first cycle was taken as the initial capacity. A value obtained by dividing the discharge capacity at the 30th cycle by the initial capacity was calculated. This value was taken as the capacity retention rate (%) after 30 cycles.

The initial capacity of the prepraed battery was 1800 mAh/g. The capacity density for the negative electrode material was 1.7 mAh/cm². The capacity retention rate after 30 cycles was 95%.

### [Example 2]

Silicon titanium alloy as a negative electrode active material, UPIA-LB-1001 (a polyimide precursor varnish manufactured by Ube Industries, Ltd.) as a binder resin composition for an electrode, and acetylene black as a conductive auxiliary agent were blended in a mass ratio of 80 : 18 : 2 (the amount of UPIA-LB-1001 is the amount of solid content (polyimide precursor)), and NMP (N-methyl-2-pyrrolidone) was added so that the slurry concentration became about 60 mass% to prepare a negative electrode mixture paste. This negative electrode mixture paste was applied onto a nickel-plated steel foil (thickness 10 µm) as a current collector, placed in a vacuum dryer, and heat-treated at 350 °C for 1 hour to prepare an electrode (negative electrode) on which an electrode active material layer having a thickness of 3 µm and no electrolyte was formed.

The prepared negative electrode was cut into a size of 3 cm × 5 cm, a polyethylene oxide-based polymer electrolyte membrane (thickness 80 µm) as a solid electrolyte layer and a lithium foil (thickness 500 µm) as a counter electrode (a positive electrode) were used, and the prepared negative electrode, the solid electrolyte layer and the counter electrode were laminated in this order, and the negative electrode current collector and the positive electrode were connected to prepare an all-solid battery.

The prepared battery was charged and discharged 30 cycles at a constant current of 0.59 mA in a battery voltage range of 1 mV to 1 V under an environment of 45 °C. The discharge capacity at the first cycle was taken as the initial capacity. A value obtained by dividing the discharge capacity at the 30th cycle by the initial capacity was calculated. This value was taken as the capacity retention rate (%) after 30 cycles.

The initial capacity of the prepraed battery was 1300 mAh/g. The capacity density for the negative electrode material was 1.8 mAh/cm². The capacity retention rate after 30 cycles was 97%.

### INDUSTRIAL APPLICABILITY

According to the present inventions, a practical all-solid secondary battery can be obtained, even if the electrode active material layer does not contain an electrolyte which was an essential component in a conventional electrode for an all-solid secondary battery.

## Claims

1. An electrode for an all-solid secondary battery, comprising an electrode active material layer comprising an electrode active material and a binder resin on a current collector,
wherein the binder resin comprises a polyimide resin, and
the electrode active material layer does not contain an electrolyte.

2. The electrode according to claim 1, wherein the electrode active material layer further comprises a conductive auxiliary agent.

3. An all-solid secondary battery, comprising a positive electrode, a solid electrolyte layer and a negative electrode,
wherein the positive electrode and/or the negative electrode is the electrode according to claim 1 or 2.

4. A method of producing an electrode for an all-solid secondary battery, comprising
a step of applying onto a current collector an electrode mixture paste which comprises an electrode active material, a polyimide resin as a binder resin or a precursor thereof, and a solvent, but does not contain an electrolyte, and
a step of drying or heat-treating the applied electrode mixture paste to form an electrode active material layer.

5. A method of producing an all-solid secondary battery, comprising
a step of preparing an electrode sheet comprising on a current collector an electrode active material layer which comprises an electrode active material and a polyimide resin as a binder resin, but does not contain an electrolyte, and
a step of laminating and integrating the electrode sheet, a solid electrolyte containing sheet comprising a solid electrolyte, and a counter electrode sheet.

6. The method of producing an all-solid secondary battery according to claim 5,
wherein the step of preparing an electrode sheet comprises
a step of applying onto a current collector an electrode mixture paste which comprises the electrode active material, the polyimide resin as a binder resin or a precursor thereof, and a solvent, but does not contain an electrolyte, and
a step of drying or heat-treating the applied electrode mixture paste to form an electrode active material layer.

7. The method of producing an all-solid secondary battery according to claim 5 or 6,
wherein the counter electrode sheet comprises on a current collector an electrode active material layer which comprises an electrode active material and a polyimide resin as a binder resin, but does not contain an electrolyte.

8. The method of producing an all-solid secondary battery according to any one of claims 5 to 7,
wherein the electrode sheet, the solid electrolyte containing sheet and the counter electrode sheet are laminated by a dry method.
